# EUROPEAN PATENT APPLICATION

(11) **EP 4 560 930 A1**
(43) Date of publication of application: **28.05.2025**
(21) Application number: 23854233.6
(22) Date of filing: 01.08.2023
(51) Int. Cl.: H04B 7/0408

(54) **BEAM PARAMETER INFORMATION FEEDBACK METHOD, BEAM PARAMETER INFORMATION RECEIVING METHOD, COMMUNICATION NODE, AND STORAGE MEDIUM**

(30) Priority: 19.08.2022 CN 202211000598
(71) Applicant: ZTE Corporation, Shenzhen, Guangdong 518057 (CN)
(72) Inventor: LU, Zhaohua, Shenzhen, Guangdong 518057 (CN); XIAO, Huahua, Shenzhen, Guangdong 518057 (CN); WANG, Yuxin, Shenzhen, Guangdong 518057 (CN); LIU, Kun, Shenzhen, Guangdong 518057 (CN)
(74) Representative: Aipex B.V.
(86) International application number: PCT/CN2023/110513
(87) International publication number: WO 2024/037329

(57) **Abstract**

Provided are a beam parameter information feedback method, a beam parameter information receiving method, a communication node, and a storage medium. The beam parameter information feedback method includes receiving N sets of reference signal configuration information and K sets of reference signals; determining M beam parameter information groups according to the K sets of reference signals; and feeding back at least one piece of beam parameter information in the M beam parameter information groups, where K, M, and N are each a positive integer, and K is smaller than N.

## Description

This application claims priority to Chinese Patent Application No. 202211000598.5 filed with the China National Intellectual Property Administration (CNIPA) on Aug. 19, 2022, the disclosure of which is incorporated herein by reference in its entirety.

### TECHNICAL FIELD

The present application relates to the field of communication technology, for example, a beam parameter information feedback method, a beam parameter information receiving method, a communication node, and a storage medium.

### BACKGROUND

With the continuous development of communication technology, artificial intelligence (AI) has been launched for research, where research contents include, but are not limited to, channel state information (CSI) feedback, beam management, channel estimation, positioning, interference management, user scheduling, power control, and other applications. For example, one of the applications is to use AI to acquire M second beam parameter information groups after a reference slot according to N first beam parameter information groups before the reference slot. However, in some scenarios, a communication node cannot effectively obtain N beam parameter information groups and can obtain only K beam parameter information groups, where K is smaller than N. Therefore, how to acquire the second beam parameter information groups in such scenarios is an urgent problem to be solved.

### SUMMARY

An embodiment of the present application provides a beam parameter information feedback method. The method is applied by a first communication node and includes the following:
N sets of reference signal configuration information and K sets of reference signals are received.
M beam parameter information groups are determined according to the K sets of reference signals.

At least one piece of beam parameter information in the M beam parameter information groups is fed back, where K, M, and N are each a positive integer, and K is smaller than N.

An embodiment of the present application provides a beam parameter information receiving method. The method is applied by a second communication node and includes the following:
N sets of reference signal configuration information and K sets of reference signals are sent.

At least one piece of beam parameter information is received which is in M beam parameter information groups determined by a first communication node according to the K sets of reference signals, where each of K, M, and N is a positive integer, and K is smaller than N.

An embodiment of the present application provides a first communication node. The first communication node includes a processor configured to perform the beam parameter information feedback method of any previous embodiment when executing a computer program.

An embodiment of the present application provides a second communication node. The second communication node includes a processor configured to perform the beam parameter information receiving method of any previous embodiment when executing a computer program.

An embodiment of the present application provides a computer-readable storage medium storing a computer program which, when executed by a processor, causes the processor to perform the method of any previous embodiment.

The preceding embodiments and other aspects of the present application and implementations thereof are described in more detail in the brief description of drawings, detailed description, and claims.

### BRIEF DESCRIPTION OF DRAWINGS

FIG. 1 is a networking diagram of a wireless communication system according to an embodiment.
FIG. 2 is a flowchart of a beam parameter information feedback method according to an embodiment.
FIG. 3 is a flowchart of a beam parameter information receiving method according to an embodiment.
FIG. 4 is a structural diagram of a beam parameter information feedback apparatus according to an embodiment.
FIG. 5 is a structural diagram of a beam parameter information receiving apparatus according to an embodiment.
FIG. 6 is a structural diagram of a base station according to an embodiment.
FIG. 7 is a structural diagram of a user equipment (UE) according to an embodiment.

### DETAILED DESCRIPTION

It is to be understood that the embodiments described herein are merely intended to explain the present application. Embodiments of the present application are described hereinafter in conjunction with drawings.

In the subsequent description, a word such as "module", "component", or "unit" for representing an element is used merely to facilitate the description of the present application and has no particular meaning in itself. Therefore, "module", "component", and "unit" may be used in a mixed manner.

At present, AI, especially AI based on deep learning, has an extremely strong feature extraction capability and can extract features according to the existing information and predict future information according to the extracted features. The AI has been widely applied to various aspects of production and life. The AI is introduced into a wireless communication system and deeply fused with the wireless communication system to improve the performance of the wireless communication system, which has been widely recognized and studied by many manufacturers, research organizations, and researchers. Research contents, include, but are not limited to, CSI feedback, beam management, channel estimation, positioning, interference management, user scheduling, power control, and other applications.

High frequency has abundant spectrum resources and can improve the transmission efficiency of the wireless communication system. However, due to a high carrier frequency and a large path loss of the high frequency, beamforming is required to concentrate sending energy in a direction of a receiving end to obtain gains. Generally speaking, a sending end includes Nt transmit beams and the receiving end includes Nr receive beams. An optimal beam can be selected after a maximum of Nt×Nr times of beam scanning. In addition, a staged beam scanning method may be used: one receive beam is fixed and the transmit beams are scanned, or one transmit beam is fixed and the receive beams are scanned. This method may require Nt+Nr times of beam scanning to select a suboptimal beam. However, when values of Nt and Nr are relatively large, the preceding two beam scanning methods require very large resource overheads. Therefore, the AI may be used to predict future transmit beams according to historical transmit beams and/or to predict future receive beams according to historical receive beams or to predict future transmit and receive beam pairs according to historical transmit and receive beam pairs. For example, beam groups at N historical occasions (where a beam in the present application includes a transmit beam, a receive beam, and a transmit and receive beam pair) are used to predict beam groups at M future occasions so that the sending of reference signals in M future slots can be reduced, thereby saving a resource overhead of the reference signals. For example, N first beam parameter information groups before a reference slot are used for acquiring M second beam parameter information groups after the reference slot. However, in some scenarios, a communication node cannot effectively obtain the N first beam parameter information groups and can obtain only K first beam parameter information groups, where K is smaller than N. Therefore, how to acquire the second beam parameter information groups in such scenarios is an urgent problem to be solved.

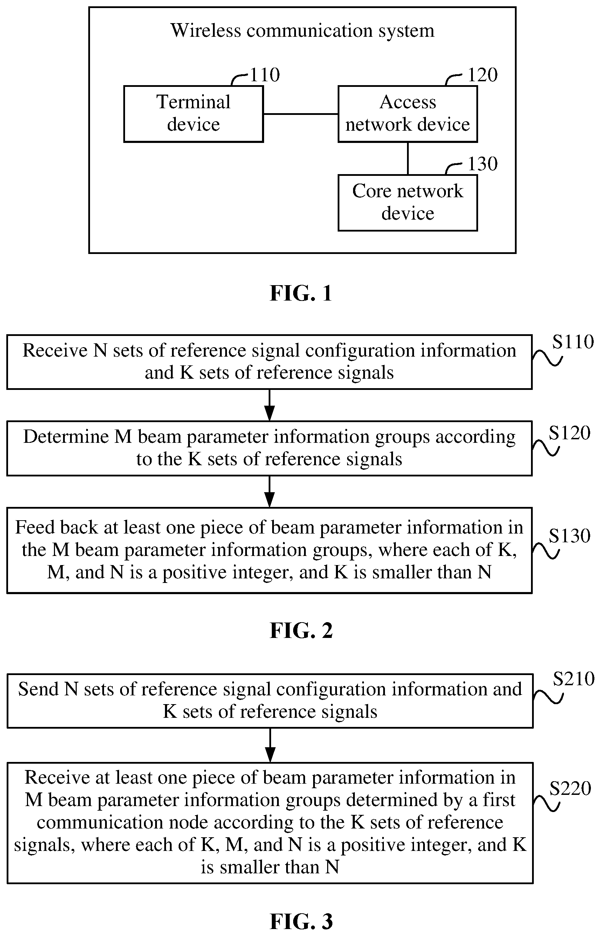

A beam parameter information feedback method and a beam parameter information receiving method of the present application are applicable to various wireless communication systems, for example, a long-term evolution (LTE) system, a 4th-generation (4G) system, a 5th-generation (5G) system, an LTE-5G hybrid architecture system, a 5G New Radio (NR) system, and a new communication system such as a 6th-generation (6G) system in future communication development. FIG. 1 is a networking diagram of a wireless communication system according to an embodiment. As shown in FIG. 1, the wireless communication system includes a terminal device 110, an access network device 120, and a core network device 130.

The terminal device 110 may be a wireless transceiving device that may be deployed on land (for example, indoor or outdoor, handheld, worn, or in-vehicle), deployed on the water surface (such as a ship), or deployed in the air (for example, an aircraft, balloon, or satellite). Examples of the terminal device 110 include a UE, a cellphone, a mobile station, a tablet computer, a notebook computer, an ultra-mobile personal computer (UMPC), a handheld computer, a netbook, a personal digital assistant (PDA), another user equipment connectable to a network, a virtual reality (VR) terminal, an augmented reality (AR) terminal, a wireless terminal in industrial control, a wireless terminal in self-driving, a wireless terminal in remote medicine, a wireless terminal in a smart grid, a wireless terminal in transportation safety, a wireless terminal in a smart city, a wireless terminal in a smart home, an Internet of Things (IoT) node, a vehicle-mounted communication apparatus in vehicle-to-everything, an entertainment or gaming device or system, and a global positioning system (GPS) device. The terminal device in embodiments of the present application may adopt multiple technologies and multiple forms of devices. In addition, the terminal device may be simply referred to as a terminal.

The access network device 120 is an access device through which the terminal device 110 accesses the wireless communication system in a wireless manner. The access network device 120 may include a base station, an evolved NodeB (eNB or eNodeB) in long-term evolution advanced (LTEA), a transmission reception point (TRP), a base station or next-generation NodeB (gNB) in a 5G mobile communication system, a base station in a future mobile communication system, and an access node in a Wireless Fidelity (Wi-Fi) system. The base station may include a macro base station, a micro base station, a home base station, a wireless remote station, a router, a Wi-Fi device, various network-side devices such as a primary cell and a secondary cell, and a location management function (LMF) device. The access network device 120 may also be a module or unit for implementing some functions of the base station, for example, a central unit (CU) or a distributed unit (DU). The access network device in the embodiments of the present application may adopt multiple technologies and multiple forms of devices. In addition, the access network device may be simply referred to as the base station.

The core network device 130 may include an access and mobility management network element and a session management network element. For example, the terminal device 110 may access the core network through the access network device 120 to perform data transmission.

The embodiments of the present application provide a beam parameter information feedback method, a beam parameter information receiving method, a communication node, and a storage medium that can be executed in the preceding wireless communication system so that a beam parameter information group can be predicted when an expected number of beam parameter information groups cannot be effectively obtained, thereby reducing a signaling overhead of the system and improving the performance of the wireless communication system.

Concepts involved in the following embodiments of the present application are explained firstly.

In the present application, in a downlink direction, a first communication node (which may also be referred to as a first communication node device) may be a base station-side device, and a second communication node (which may also be referred to as a second communication node device) may be a terminal-side device. Of course, in an uplink direction, the first communication node may be a terminal-side device, and the second communication node may be a base station-side device. In device-to-device communication, the first communication node and the second communication node may both be base stations or terminals.

In the present application, higher-layer signaling includes, but is not limited to, Radio Resource Control (RRC) and Media Access Control Control Element (MAC CE); and physical-layer signaling may also be transmitted between the base station and the terminal. For example, the physical-layer signaling is transmitted on a physical downlink control channel (PDCCH) or a physical uplink control channel (PUCCH).

In the present application, an indicator of a parameter may also be referred to as an index or an identifier (ID), which are completely equivalent concepts, for example, an ID of a wireless system resource. Herein, the wireless system resource includes, but not limited to, one of a reference signal resource, a reference signal resource group, a reference signal resource configuration, a CSI report, a CSI report set, a terminal, a base station, a panel, a neural network, a sub-neural network, or a neural network layer. The base station may indicate an ID of one resource or one group of resources to the terminal via the higher-layer signaling and/or the physical-layer signaling.

In an embodiment, AI includes devices, components, software, and modules of self-learning such as machine learning (ML), deep learning, reinforcement learning, transfer learning, deep reinforcement learning, and meta-learning. In an embodiment, the AI is implemented by an AI network (or a neural network), and the neural network includes multiple layers, where each layer includes at least one node. In an example, the neural network includes an input layer, an output layer, and at least one hidden layer, where each layer of the neural network includes, but is not limited to, at least one of a fully connected layer, a dense layer, a convolutional layer, a transposed convolutional layer, a direct connection layer, an activation function, a normalization layer, or a pooling layer. In an embodiment, each layer of the neural network may include one sub-neural network, such as a residual network (ResNet) block, a dense network (DenseNet) block, or a recurrent neural network (RNN). The AI network includes a neural network model and/or a neural network parameter corresponding to a neural network model, where the neural network model may be simply referred to as a network model, and the neural network parameter may be simply referred to as a network parameter. The network model defines the network architecture of the neural network, such as the number of layers, a size of each layer, an activation function, a linking situation, a convolution kernel, a size of a convolution stride, and a convolution type (for example, 1D convolution, 2D convolution, 3D convolution, hollow convolution, transposed convolution, separable convolution, group convolution, or dilated convolution). The network parameter includes a weight and/or a bias of each layer in the network model and their values. One network model may correspond to multiple sets of different values of neural network parameters to adapt to different scenarios. One neural network model may correspond to multiple different values of neural network parameters. The neural network parameters are obtained through online training or offline training. For example, at least one sample and label are input so that the neural network model is trained to obtain the neural network parameters.

In an embodiment, the slot may be a slot or a mini slot. One slot or mini slot includes at least one symbol. The symbol here refers to a time unit in a subframe, frame, or slot. For example, the symbol may be an orthogonal frequency-division multiplexing (OFDM) symbol, a single-carrier frequency-division multiple access (SC-FDMA) symbol, or an orthogonal frequency-division multiple access (OFDMA) symbol.

In an embodiment, transmission includes sending or receiving, for example, sending data or signals or receiving data or signals.

In an embodiment, to calculate CSI or perform channel estimation, mobility management, positioning, or the like, the base station or a user is required to send a reference signal (RS). The RS includes, but is not limited to, a channel state information reference signal (CSI-RS), a Channel State Information - Interference Measurement (CSI-IM) signal, a sounding reference signal (SRS), a synchronization signal block (SSB), a physical broadcast channel (PBCH), and a synchronization signal block/physical broadcast channel (SSB/PBCH). The CSI-RS includes a zero power CSI-RS (ZP CSI-RS) and a non-zero power CSI-RS (NZP CSI-RS), where the NZP CSI-RS may be used for measuring a channel or interference. The CSI-RS may also be used for tracking, which is called a CSI-RS for tracking (TRS). The CSI-IM is generally used for measuring interference. The SRS is used for measuring an uplink channel. In addition, a set of resource elements (REs) included in a time-frequency resource for transmitting the RS is referred to as a reference signal resource, for example, a CSI-RS resource, an SRS resource, a CSI-IM resource, or an SSB resource. In the present application, the SSB includes the SSB and/or the PBCH.

In an embodiment, in a communication system, resources for transmitting RSs may be referred to as reference signal resources. To reduce signaling overhead and for other reasons, multiple reference signal resources may be combined into one set (such as CSI-RS resource set, CSI-IM resource set, or SRS resource set). One reference signal resource set includes at least one reference signal resource. Multiple reference signal resource sets may all be derived from the same reference signal resource setting (such as CSI-RS resource setting or SRS resource setting, where CSI-RS resource setting may be merged with CSI-IM resource setting and collectively referred to as CSI-RS resource setting) for configuration of parameter information of RSs.

In an embodiment, the base station configures reference signal configuration information, where the reference signal configuration information is used for indicating a time-frequency position of a reference signal resource, a time domain characteristic (such as periodic RS, aperiodic RS, or semi-persistent RS), a reference signal resource set, quasi co-location information, an index of a reference signal resource, an index of a reference signal resource set, and the like. One set of reference signal configuration information corresponds to one set of reference signal resources. The reference signal resources are used for acquiring CSI such as a beam parameter information group, where one beam parameter information group includes at least one piece of beam parameter information. One set of reference signal resources (or measurement resource information) includes C_{N} pieces of channel measurement resource (CMR) information and/or C_{M} pieces of interference measurement resource (IMR) information, where C_{N} and C_{M} are each a positive integer. The base station configures the measurement resource information in a report configuration (report config) or a reporting setting. In some examples, one piece of CMR information includes at least one channel reference signal resource setting, for example, at least one CSI-RS resource setting or at least one SRS resource setting, and one piece of IMR information includes at least one interference reference signal resource setting, for example, at least one CSI-IM resource setting. In some examples, one piece of CMR information includes at least one channel reference signal resource set, for example, at least one CSI-RS resource set or at least one SRS resource set, and one piece of IMR information includes at least one interference reference signal resource set, for example, at least one CSI-IM resource set. In some examples, one piece of CMR information includes at least one channel reference signal resource, for example, at least one CSI-RS resource or at least one SRS resource, and one piece of IMR information includes at least one interference reference signal resource, for example, at least one CSI-IM resource.

In an embodiment, a beam includes a transmit beam, a receive beam, precoding, a precoding matrix, an index of a precoding matrix, a receive and transmit beam pair, and a transmit and receive beam pair. The beam may be a resource (such as precoding of a sending end, precoding of a receiving end, an antenna port, an antenna weight vector, or an antenna weight matrix). A beam index may be replaced with a resource index because the beam may be bound to some time-frequency resources in transmission. The beam may be a transmission (sending/receiving) manner, where the transmission manner may include space-division multiplexing and a frequency domain/time domain diversity. An indication of a receive beam refers to that the sending end may perform indication through the current reference signal resource (or reference signal resource index) and antenna port and a quasi co-location (QCL) assumption of a reference signal resource (or benchmark reference signal resource or reference signal resource index) and an antenna port, the QCL assumption being fed back and reported by the UE. A beam pair includes a combination of a transmit beam and a receive beam.

In an embodiment, a beam direction or beam angle may include at least one of an angle of arrival (AOA), an angle of departure (AOD), a zenith angle of departure (ZOD), a zenith angle of arrival (ZOA), a vector or vector index constructed by at least one angle of the AOA, AOD, ZOD, or ZOA, a discrete Fourier transformation (DFT) vector, a code word in a codebook, a transmit beam index, a receive beam index, a transmit beam group index, or a receive beam group index. In an embodiment, the beam refers to a spatial filter or a spatial receive/transmit parameter. Spatial filtering may be at least one of a DFT vector, a precoding vector, a DFT matrix, a precoding matrix, a vector constituted by a linear combination of multiple DFTs, or a vector constituted by a linear combination of multiple precoding vectors.

In an embodiment, especially in high-frequency transmission, due to a relatively high carrier frequency and a large path loss, beamforming is required to concentrate energy in the direction of the terminal for propagation. Therefore, beam management is required. The beam management includes, but is not limited to, beam scanning, beam tracking, and beam recovery. The core problem to be solved is how to acquire an accurate beam pair with a control overhead as low as possible. The beam scanning includes beam scanning at the sending end and/or beam scanning at the receiving end. To reduce an overhead of beam scanning, two-stage scanning may be performed. In an embodiment, beam training may include training in the first stage, second stage, and third stage. In the first stage, beams at the sending end and beams at the receiving end are both scanned; in the second stage of beam scanning, one receive beam is fixed and different transmit beams are scanned; in the third stage, one transmit beam is fixed and different receive beams are scanned. In an example, for example, N_{T} beams are sent, the receive beam is fixed, a repetition parameter (repetition) is off, and reference signal received power (RSRP) corresponding to the N_{T} beams is measured to find and report L preferred beams. In an example, one beam is sent, N_{R} receive beams are used, the repetition parameter is on, and RSRP corresponding to the N_{R} beams is measured to find and report L optimal beams. When both the values of N_{R} and N_{T} are very large, the overhead is very large and thus a very large reference signal overhead is required. Here, N_{R} and N_{T} are each a positive integer. A beam prediction function of AI may be used to reduce the reference signal overhead in the beam scanning. Beam prediction of AI includes spatial domain beam prediction and time domain beam prediction, or space-time beam prediction.

In some examples, the AI may be used for implementing the spatial domain beam prediction, that is, only one beam parameter information group is input. The beam parameter information group includes L0 pieces of beam parameter information, and another beam information group is predicted according to the L0 pieces of beam parameter information, where the beam information group includes L1 pieces of beam parameter information. Here, the L1 pieces of beam parameter information may include the L0 pieces of beam parameter information, where L, L1, and L0 are each a positive integer, L0 < L1, and they are all positive integers. The beam may be a transmit beam, a receive beam, or a transmit and receive beam pair. Each beam may correspond to one beam direction. In some examples, the spatial domain beam prediction may be implemented by an AI module such as a neural network. Beam parameter information corresponding to L0 beams is combined into a beam parameter information array (first beam parameter information array) and input into the neural network. The neural network outputs a beam parameter information array (second beam parameter information array) corresponding to L1 beams. K preferred beams are determined by indexes corresponding to K largest values in the second beam parameter information array. In some examples, the spatial domain beam prediction may be implemented in a non-AI manner, such as linear mapping or nonlinear mapping.

In some examples, the AI may be used for implementing the time domain beam prediction, that is, only N beam parameter information groups are input. Each beam parameter information group includes L0 pieces of beam parameter information, and M second beam parameter information groups are predicted according to N first beam parameter information groups. Each beam parameter information group among the M second beam parameter information groups includes L1 pieces of beam parameter information. N, M, L, L1, and L0 are each a positive integer, L0 ≤ L1, and they are all positive integers. The beam may be a transmit beam, a receive beam, or a transmit and receive beam pair. Each beam may correspond to one beam direction. Here, the N first beam parameter information groups are beam parameter information before a reference slot, and the M second beam parameter information groups are beam parameter information after the reference slot. Here, when L0 = L1, the time domain beam prediction is performed, and when L0 < L1, the space-time beam prediction is performed. In some examples, the time domain beam prediction may be implemented by an AI module such as a neural network. The N beam parameter information groups are input, where each beam parameter information group includes the L0 pieces of beam parameter information. N×L0 pieces of beam parameter information are combined into a larger beam parameter information array (first beam parameter information array) and input into the neural network. The neural network outputs M beam parameter information groups, where each beam parameter information group includes the L1 pieces of beam parameter information. M×L1 pieces of beam parameter information may also be combined into a beam parameter information array (second beam parameter information array). For each group of beams among M groups of beams, indexes corresponding to K largest pieces of beam parameter information are determined as K preferred beams of the beam information group. L1 is generally greater than or equal to L0, and they are both positive integers. In some examples, the time domain beam prediction may be implemented in a non-AI manner, such as linear mapping or nonlinear mapping.

In some examples, neural network parameters are obtained through online training or offline training. For example, at least one sample and label are input so that a neural network model is trained to obtain the neural network parameters. In some examples, the sample is the first beam parameter information array measured by the terminal, and the label is the second beam parameter information array corresponding to the first beam parameter information array measured by the terminal. In network training, the first beam parameter information array and the second beam parameter information array have a correspondence, for example, a one-to-one correspondence. In a deployment or testing stage of the neural network, the first beam parameter information array is input into the neural network to output a predicted second beam parameter information array, and the predicted second beam parameter information array is compared with the second beam parameter information array corresponding to the label so that the prediction performance of the network can be known, and the neural network can be trained according to a loss function of the two second beam parameter information arrays.

In some examples, indexes of transmit beams and/or receive beams are numbered in an agreed manner to form beam indexes. A beam index includes one of an index of a transmit beam, an index of a receive beam, or an index of a transmit and receive beam pair. One beam index corresponds to one beam direction or a vector or matrix corresponding to one beam direction. The terminal receives an RS (such as CSI-RS or SSB), measures beam parameter information corresponding to each beam, and combines beam parameter information corresponding to multiple beams to obtain a beam parameter information array. Generally speaking, the first beam parameter information array is a beam parameter information array formed by beam parameter information corresponding to a first beam set, and the second beam parameter information array is a beam parameter information array formed by beam parameter information corresponding to a second beam set. The first beam set is a subset of the second beam set.

In some examples, elements in the first beam parameter information array need to be normalized to facilitate a faster convergence of the neural network. Normalization refers to that values of elements in an array are normalized to an interval greater than or equal to a and less than or equal to b. In an example, a = - 0.5 and b = 0.5. In an example, a = 0 and b = 1. In an example, the elements in the array are divided by a number with the largest absolute value among the elements in the array to implement the normalization. In an example, the elements in the array are divided by a variance of the elements in the array to implement the normalization. In an example, the elements in the array are divided by a fixed value (for example, a maximum value of all elements in all samples) to implement the normalization. In an example, the elements in the array are divided by a statistical value (for example, a statistical variance value of all the elements in all the samples) to implement the normalization. Indexes, such as beam indexes, CSI-RS resource indicators (CRIs), or synchronization signal block resource indicators (SSBRIs) may be normalized through one-hot encoding.

In some examples, the beam parameter information array is a one-dimensional array, for example, a vector. In some examples, the beam parameter information array is a two-dimensional array, for example, a matrix. In some examples, the beam parameter information array is an array of greater than two dimensions, for example, a tensor. The vector or the matrix may be regarded as special cases of the tensor.

In an embodiment, the beam parameter information is L1 reference signal received power (L1-RSRP or RSRP) corresponding to the beam. In an embodiment, the beam parameter information is an L1 signal-to-interference-plus-noise ratio (L1-SINR or SINR) corresponding to the beam. In an embodiment, the beam parameter information is reference signal received quality (RSRQ) corresponding to the beam. In an embodiment, the beam parameter information is a beam angle (at least one of the AOA, ZOA, AOD, or ZOD, which is sometimes also referred to as a horizontal angle of arrival, a vertical angle of arrival, a horizontal angle of departure, or a vertical angle of departure) corresponding to the beam. In an embodiment, the beam parameter information is an index of a transmit beam corresponding to the beam. In an embodiment, the beam parameter information is an index of a receive beam corresponding to the beam. In an embodiment, the beam parameter information is an index of a transmit and receive beam pair (simply referred to as an index of a beam pair or a beam pair) corresponding to the beam. In an embodiment, the beam parameter information is a beam domain receive power map (BDRPM) corresponding to the beam. In an embodiment, the beam parameter information is a CRI corresponding to the beam. In an embodiment, the beam parameter information is an SSBRI corresponding to the beam. In an embodiment, the beam parameter information group is a combination of at least two of the following beam parameter information corresponding to at least one beam: RSRP, RSRQ, an SINR, a beam angle, an index of a transmit beam, an index of a receive beam, an index of a beam pair, a CRI, or an SSBRI. In an embodiment, one beam parameter information group includes at least one piece of beam parameter information. In an embodiment, the beam parameter information is a linear value of one of the RSRP, RSRQ, or SINR. In an embodiment, the beam parameter information is a logarithmic value or a decibel (DB) value of one of the RSRP, RSRQ, or SINR.

In an embodiment, the beam parameter information may be obtained based on a CSI-RS measurement. In an embodiment, the beam parameter information may be obtained based on an SSB measurement. In an embodiment, the beam parameter information may be obtained based on an SRS measurement.

In an example, to transmit the beam parameter information group, for example, the terminal feeds back the beam parameter information, and the base station receives the beam parameter information group. In some examples, the beam parameter information group is also CSI and needs to be transmitted in a transmission resource defined in a CSI report. To transmit the beam parameter information group, the terminal and the base station define the CSI report (or CSI report config), where the CSI report defines at least one of the following parameters: a time-frequency resource for CSI feedback, a report quality (reportQuantity) included in CSI, a time domain type (reportConfigType) of CSI feedback, a CMR, an IMR, or a measured bandwidth size. The CSI report may be transmitted on an uplink transmission resource, where the uplink transmission resource may include a physical uplink shared channel (PUSCH) and a PUCCH. The CSI report also includes a time domain characteristic, including a periodic CSI report (P-CSI), an aperiodic CSI report (AP-CSI), and a semi-persistent CSI report (SP-CSI). Generally speaking, the number of bits transmitted by the P-CSI is relatively small and the P-CSI is transmitted on the PUCCH; the number of bits transmitted by the AP-CSI is relatively large and the AP-CSI is generally transmitted on the PUSCH; and the SP-CSI may be transmitted based on the PUSCH or the PUCCH. The P-CSI transmitted based on the PUCCH is generally configured via higher-layer signaling (RRC), the SP-CSI transmitted based on the PUCCH is also configured or activated via higher-layer signaling (RRC and/or MAC CE), the SP-CSI or AP-CSI transmitted based on the PUSCH is triggered via physical-layer signaling (downlink control information (DCI)), and the DCI is generally transmitted on a PDCCH. In an embodiment of the present application, the feedback of the beam parameter information group may also be referred to as transmitting the beam parameter information group or sending the beam parameter information group. For example, the beam parameter information group is carried on the uplink transmission resource for feedback or transmission. The uplink transmission resource and the corresponding CSI are both indicated in one CSI report. In an embodiment of the present application, the feedback of one CSI report refers to the feedback of a beam parameter information group corresponding to the CSI report.

In an embodiment, the base station configures, via higher-layer signaling and/or physical-layer signaling for the terminal, N_{C} CSI reports to be fed back to the base station. Each CSI report has an identity (ID) called CSI reportID. The terminal may select M_{C} CSI reports from the N_{C} CSI reports according to a computing capability or processing capability of the terminal and a requirement of the base station. The terminal feeds back at least one CSI report among the M_{C} CSI reports according to uplink feedback resources, where N_{C} and M_{C} are each a positive integer and M_{C} ≤ N_{C}. In an example, the M_{C} CSI reports need to be fed back. However, feedback resources of at least two of the M_{C} reports conflict. A conflict of feedback resources of two reports refers to that transmission resources (such as PUCCHs or PUSCHs) for feeding back the two reports include at least one same symbol and/or at least one same subcarrier.

The beam parameter information feedback method, the beam parameter information receiving method, the communication node, and the storage medium and technical effects thereof are described below.

FIG. 2 is a flowchart of a beam parameter information feedback method according to an embodiment. As shown in FIG. 2, the method of this embodiment is applied to a first communication node. The method includes S110 to S130.

In S110, N sets of reference signal configuration information and K sets of reference signals are received.

In an embodiment, a method for receiving the K sets of reference signals may be receiving the K sets of reference signals according to the N sets of reference signal configuration information.

A second communication node transmits the N sets of reference signal configuration information and the K sets of reference signals corresponding to K sets of reference signal configuration information. The first communication node receives the N sets of reference signal configuration information and receives the K sets of reference signals according to the N sets of reference signal configuration information, where each of K and N is a positive integer and K is smaller than N.

Each of K and N being a positive integer and K being smaller than N means that the second communication node transmits the K (smaller than N) sets of reference signals due to a conflict between reference signal resources configured by the second communication node or for other reasons, and the first communication node receives the K sets of reference signals. In practical application, in the case of no conflict between the configured reference signal resources and no other influencing factors, the second communication node may transmit N sets of reference signals, and the first communication node receives the N sets of reference signals, that is, K is equal to N. Of course, in some examples, the second communication node transmits the N sets of reference signals, and the first communication node can effectively receive only the K sets of reference signals due to a capability of the first communication node or poor signals.

In an embodiment, reference signal configuration information includes a resource type (resourceType), where the resource type defines a time domain transmission characteristic of a reference signal, and a time domain characteristic includes, but is not limited to, an aperiodic, periodic, or semi-persistent characteristic, which indicates that the transmitted reference signal is an aperiodically transmitted reference signal, a periodically transmitted reference signal, or a semi-persistently transmitted reference signal respectively, which is called an aperiodic reference signal, a periodic reference signal, or a semi-persistent reference signal respectively. The periodic reference signal or the semi-persistent reference signal is configured with a period and/or a slot offset via higher-layer signaling, where the period and the slot offset may be jointly encoded (for example, configured via higher-layer signaling periodicityAndOffset, where a user may know a transmission period and a transmission slot offset of the periodic or semi-persistent reference signal by acquiring the parameter). In an example, the second communication node configures the N sets of reference signal configuration information. The N sets of reference signal configuration information include K1 periodic reference signals, K2 aperiodic reference signals, and K3 semi-persistent reference signals. K1, K2, and K3 are each a non-negative integer, and K1 + K2 + K3 = N. In an example, the second communication node configures the N sets of reference signal configuration information. The N sets of reference signal configuration information include the same resource type, that is, two of K1, K2, and K3 have zero values, for example, all are periodic reference signals or aperiodic reference signals or semi-persistent reference signals. In an example, in the N sets of reference signal configuration information, the resource type of at least one reference signal is different from the resource type of another one reference signal, for example, at least two of K1, K2, and K3 have values greater than zero. In an example, the second communication node needs to configure and transmit N CSI-RSs, where N = 4, and each CSI-RS may be at least one of a periodic, semi-persistent, or aperiodic CSI-RS. For example, one configuration includes two sets of periodic reference signals, one set of aperiodic reference signals, and one set of semi-persistent reference signals; one configuration includes three sets of semi-persistent reference signals and one set of aperiodic reference signals; one configuration includes two sets of periodic reference signals and two sets of aperiodic reference signals; one configuration includes two sets of semi-persistent reference signals and two sets of periodic reference signals.

In an embodiment, one set of reference signals includes one of one reference signal resource, one group of reference signal resources, one reference signal resource set, or a reference signal resource corresponding to one reference signal resource configuration. For example, one set of reference signals includes one reference signal resource, for example, one CSI-RS resource, one SRS resource, or one SSB resource. In an embodiment, one set of reference signals includes one group of reference signal resources, for example, one group of CSI-RS resources, one group of SRS resources, or one group of SSB resources. In an embodiment, one set of reference signals includes one reference signal resource set, for example, one CSI-RS resource set, one SRS resource set, or one SSB resource set. In an embodiment, one set of reference signals includes the reference signal resource corresponding to one reference signal resource configuration, for example, a reference signal resource corresponding to one CSI-RS resource config/setting, a reference signal resource corresponding to one SRS resource config/setting, or a reference signal resource corresponding to one SSB resource config/setting. Here, one group of reference signals include at least one reference signal resource, and multiple groups of reference signal resources may be in the same reference signal resource set.

In S120, M beam parameter information groups are determined according to the K sets of reference signals.

In S130, at least one piece of beam parameter information in the M beam parameter information groups is fed back, where each of K, M, and N is a positive integer, and K is smaller than N.

In some examples, the communication node obtains the beam parameter information groups by receiving the reference signals, where one beam parameter information group may include one or more pieces of beam parameter information, and one piece of beam parameter information corresponds to one beam. The beam parameter information includes at least one of the following parameters: received power (such as L1-RSRP, RSRP, differential L1-RSRP, or differential RSRP), a received signal-to-interference-plus-noise ratio (such as an L1-SINR, SINR, differential L1-SINR, or differential SINR), a BDRPM, RSRQ, a reference signal resource index (CRI or SSBRI) corresponding to the beam, a direction or angle of the beam, or an index of the beam (such as an index of a transmit beam, an index of a receive beam, or an index of a transmit and receive beam pair). The second communication node sends the reference signals for measuring the beam parameter information in K slots. The first communication node separately receives, in at least one slot, the reference signals sent in the K slots and obtains a beam parameter information group Bᵢ of the corresponding slot according to the received reference signals sent in the K slots, where i = 1, ..., K. Here, the K slots are before a reference slot. In an embodiment, the reference slot includes one of a slot agreed by the first communication node and the second communication node or a current slot; a slot indicated by the second communication node; a slot obtained by adding a fixed offset to a slot indicated by the second communication node; or a slot obtained by adding a fixed offset to a slot where the first communication node receives indication signaling from the second communication node.

In an embodiment, the first communication node does not expect to receive smaller than N sets of reference signals. That is to say, if the second communication node configures the N sets of reference signal configuration information, the first communication node does not expect the second communication node to transmit smaller than N sets of reference signals corresponding to the N sets of reference signal configuration information or the first communication node expects to receive the N sets of reference signals. If the first communication node can receive the N sets of reference signals, the first communication node obtains N beam parameter information groups corresponding to the N sets of reference signals according to the N sets of reference signals and acquires the M beam parameter information groups according to the N beam parameter information groups. L preferred pieces of beam parameter information in the M beam parameter information groups are determined, where M and N are each a positive integer, and generally M is not greater than N. In a special case, M = 1. For example, the second communication node configures the N sets of reference signal configuration information and needs to transmit the N sets of reference signals at one or more occasions, where N = 4. The first communication node receives the N sets of reference signals in one or more slots, where N = 4. One beam parameter information group is obtained through a series of operations according to the obtained N sets of reference signals, where N = 4.

The M beam parameter information groups (for example, second beam parameter information groups) are acquired according to the N beam parameter information groups (for example, first beam parameter information groups). For example, the N beam parameter information groups are encoded in sequence and input into a first AI module, and the first AI module outputs the M beam parameter information groups. In some examples, encoding the beam parameter information includes, but is not limited to, one of: normalizing elements in a beam parameter information group (for example, normalizing the elements to an interval of [0, 1] or [-0.5, 0.5]), sampling a beam parameter information group, or performing a joint operation on multiple beam parameter information groups. Here, the N beam parameter information groups are beam parameter information groups before the reference slot. The M beam parameter information groups are beam parameter information groups after the reference slot. N is an integer greater than 1, and M is an integer greater than or equal to 1. In some examples, the M beam parameter information groups may be acquired according to the N beam parameter information groups in a non-AI manner, for example, through linear mapping. The N beam parameter information groups are filtered or averaged to obtain the M beam parameter information groups. For example, the N beam parameter information groups are processed into the M beam parameter information groups through nonlinear mapping. In some examples, N is a positive integer greater than M. In some examples, M is a positive integer and is related to the capability of the first communication node. Some first communication nodes may acquire one beam parameter information group according to the N beam parameter information groups. Some first communication nodes may acquire more than one beam parameter information group according to the N beam parameter information groups. In some examples, acquiring the M beam parameter information groups according to the N beam parameter information groups is equivalently described as one of predicting the M beam parameter information groups according to the N beam parameter information groups; processing the N beam parameter information groups into the M beam parameter information groups; or mapping the N beam parameter information groups into the M beam parameter information groups.

In an embodiment, beam parameter information corresponding to the M beam parameter information groups may also be determined. For the i-th beam parameter information group, beams corresponding to Lᵢ beam information parameters with the largest beam parameter information values in the i-th beam parameter information group are selected as preferred beams of the i-th beam information group. For example, preferred beam parameters of the nᵢ-th slot are predicted. Here, Lᵢ and nᵢ are each a positive integer, and i = 1, ..., M. In an example, all Lᵢ are the same, for example, 1, 2, 4, or 8. In some examples, nᵢ denotes an index of a slot after the reference slot and is sorted in ascending order as i increases. In some examples, M pieces of beam parameter information are processed into M CRIs and/or M L1-RSRP. In some examples, M pieces of beam parameter information are processed into M SSBRIs and/or M L1-RSRP. In some examples, M pieces of beam parameter information are processed into M CRIs and/or M L1-SINRs. In some examples, M pieces of beam parameter information are processed into M SSBRIs and/or M L1-SINRs.

In an embodiment, the M beam parameter information groups may be acquired according to the N beam parameter information groups, and each beam parameter information group among the M beam parameter information groups may be separately processed into K_{C} pieces of beam parameter information. 1 ≤ K_{C} ≤ M. In some examples, K_{C} pieces of channel state information may be directly acquired according to the N beam parameter information groups. That is, the first AI module and a second AI module are directly merged into a larger AI module. In some examples, the M beam parameter information groups or the corresponding beam parameter information may be directly acquired according to received N reference signals.

In an embodiment, although the first communication node does not expect to receive smaller than N sets of reference signals, the second communication node transmits only the K sets of reference signals among the N sets of reference signals due to a resource conflict or for other reasons, and the first communication node receives the K sets of reference signals. The first communication node may determine the M beam parameter information groups according to the K sets of reference signals.

In an embodiment, the N sets of reference signal configuration information correspond to the N sets of reference signals, and the K sets of reference signals are part of the N sets of reference signals. In an embodiment, the M beam parameter information groups may be determined in an AI beam prediction manner which may include, for example, spatial domain beam prediction and time domain beam prediction, or space-time beam prediction. In the spatial domain beam prediction, the N sets of reference signal configuration information correspond to the N sets of reference signals, and the N sets of reference signals belong to the same reference signal set or the same reference signal configuration.

In an embodiment, the first communication node determines the M beam parameter information groups according to the K sets of reference signals and at least one of the rules below.

Rule (1) The first communication node determines that the M beam parameter information groups are empty. That is, the first communication node does not perform beam prediction.

The second communication node transmits only the K sets of reference signals among the N sets of reference signals due to the resource conflict or for other reasons, where K is smaller than N. The first communication node receives the K sets of reference signals and finds that the K sets of reference signals are fewer than the expected N sets of reference signals and the M beam parameter information groups after the reference slot cannot be acquired through beam parameter information groups corresponding to the K sets of reference signals. Therefore, the first communication node does not perform the operation of acquiring the M beam parameter information groups through the beam parameter information groups corresponding to the K sets of reference signals. The first communication node does not feed back preferred beam parameter information after the reference slot, either.

Rule (2) The first communication node determines the M beam parameter information groups according to at least one set of reference signals among the K sets of reference signals.

The second communication node transmits only the K sets of reference signals among the N sets of reference signals due to the resource conflict or for other reasons, where K is smaller than N. The first communication node receives the K sets of reference signals and acquires the M beam parameter information groups according to the at least one set of reference signals among the K sets of reference signals.

In an example, the first communication node determines, according to a set of reference signals in the largest transmission slot among the K sets of reference signals, that is, a reference signal closest to the reference slot, a beam parameter information group corresponding to the reference signal in the largest transmission slot as the M beam parameter information groups. For example, Lc pieces of beam parameter information with the largest beam parameter information values in the beam parameter information group corresponding to the reference signal in the largest transmission slot are determined as the beam parameter information. Here, M = 1, and the M beam parameter information groups include only the Lc pieces of beam parameter information. Here, Lc is a positive integer. For example, Lc may have a value of 1.

Rule (3) The first communication node determines K first beam parameter information groups according to the K sets of reference signals and acquires the M beam parameter information groups (for example, second beam parameter information groups) according to the K first beam parameter information groups, where M is a positive integer.

The second communication node transmits only the K sets of reference signals among the N sets of reference signals due to the resource conflict or for other reasons, where K is smaller than N. The first communication node receives the K sets of reference signals and finds that the K sets of reference signals are fewer than the expected N sets of reference signals. The first communication node determines, according to a processing capability of the first communication node, whether the M beam parameter information groups can be acquired according to K beam parameter information groups. If yes, the K first beam parameter information groups are determined according to the K sets of reference signals, and the M beam parameter information groups are acquired according to the K first beam parameter information groups. Otherwise, the operation of acquiring the M beam parameter information groups through the beam parameter information groups corresponding to the K sets of reference signals is not performed, or the preferred beam parameter information corresponding to at least one beam parameter information group among the K beam parameter information groups is acquired in an agreed manner. In an example, the first communication node searches for an AI model locally, and the AI model can acquire the M beam parameter information groups according to the K first beam parameter information groups, for example, the K first beam parameter information groups are used as input of the AI model, and the M beam parameter information groups are output of the AI model.

Rule (4) The first communication node determines the K first beam parameter information groups according to the K sets of reference signals, processes the K first beam parameter information groups into N second beam parameter information groups, and acquires the M beam parameter information groups (for example, third beam parameter information groups) according to the N second beam parameter information groups, where M is a positive integer.

The second communication node transmits only the K sets of reference signals among the N sets of reference signals due to the resource conflict or for other reasons, where K is smaller than N. The first communication node receives the K sets of reference signals and finds that the K sets of reference signals are fewer than the expected N sets of reference signals. The first communication node determines, according to the processing capability of the first communication node, whether the M beam parameter information groups can be acquired according to the K beam parameter information groups. If yes, the first communication node determines the K first beam parameter information groups according to the K sets of reference signals, processes the K first beam parameter information groups into the N second beam parameter information groups, and acquires the M beam parameter information groups according to the N second beam parameter information groups. Otherwise, the operation of acquiring the M beam parameter information groups through the beam parameter information groups corresponding to the K sets of reference signals is not performed, or the preferred beam parameter information corresponding to at least one beam parameter information group among the K beam parameter information groups is acquired in the agreed manner.

In an example, the number of elements included in each of the K first beam parameter information groups is smaller than the number of elements included in each of the N second beam parameter information groups, and the number of elements included in each of the N second beam parameter information groups is smaller than or equal to the number of elements included in each of the M beam parameter information groups (for example, third beam parameter information groups).

In an example, the first communication node performs a zero-padding operation on the K first beam parameter information groups in a zero-padding manner to acquire the N second beam parameter information groups. For example, according to slots for transmitting reference signals corresponding to the K first beam parameter information groups, which beam parameter information groups are received among the N beam parameter information groups is determined, and a beam parameter information group corresponding to a reference signal not received is padded with a zero matrix. The zero matrix is a vector of L₀×1 dimensions or a matrix of Lᵥ×Lₕ dimensions, where L₀, Lᵥ, and Lₕ are each a positive integer, Lᵥ × Lₕ = L₀, and L₀, Lᵥ, and Lₕ denote the number of elements in the beam parameter information group and the number of horizontal beams and the number of vertical beams corresponding to beam parameter information in the beam parameter information group, respectively.

Rule (5) When K is smaller than K0, the first communication node determines that the beam parameter information groups are empty or determines the M beam parameter information groups according to the at least one set of reference signals among the K sets of reference signals. When K is larger than K0, the first communication node determines the K first beam parameter information groups according to the K sets of reference signals, processes the K first beam parameter information groups into the N second beam parameter information groups, and acquires the M beam parameter information groups according to the N second beam parameter information groups, or the first communication node determines the K first beam parameter information groups according to the K sets of reference signals and determines the M beam parameter information groups according to the K first beam parameter information groups, where M and K0 are each a positive integer.

The second communication node transmits only the K sets of reference signals among the N sets of reference signals due to the resource conflict or for other reasons, where K is smaller than N. The first communication node receives the K sets of reference signals and finds that the K sets of reference signals are fewer than the expected N sets of reference signals. When K is larger than K0, the first communication node determines the K first beam parameter information groups according to the K sets of reference signals, processes the K first beam parameter information groups into the N second beam parameter information groups, and acquires the M beam parameter information groups according to the N second beam parameter information groups (for example, the operation is performed by an original AI model), or the first communication node determines the K first beam parameter information groups according to the K sets of reference signals and determines the M beam parameter information groups according to the K first beam parameter information groups (for example, a new AI model is searched for to perform the operation). When K is smaller than K0, the first communication node does not perform the operation of acquiring the M beam parameter information groups through the beam parameter information groups corresponding to the K sets of reference signals or determines the M beam parameter information groups according to the at least one set of reference signals among the K sets of reference signals.

K0 is a positive integer greater than 0 and is obtained according to a configuration of the second communication node or according to an agreement between the second communication node and the first communication node.

In some examples, the first communication node receives the first, second, ..., and (N-1)-th sets of reference signals among the N sets of reference signals, and the first communication node does not perform the operation of acquiring the M beam parameter information groups according to the K beam parameter information groups. In some examples, the first communication node receives at least the N-th set of reference signals among the N sets of reference signals, and the first communication node acquires preferred beam parameter information in a beam parameter information group corresponding to the N-th set of reference signals according to the N-th set of reference signals in the agreed manner. In some examples, the first communication node receives at least the N-th set of reference signals among the N sets of reference signals, and the first communication node determines the K first beam parameter information groups according to the K sets of reference signals, processes the K first beam parameter information groups into the N second beam parameter information groups, and acquires the M beam parameter information groups according to the N second beam parameter information groups.

In an embodiment, one set of reference signals includes one group of reference signal resources. If one or more reference signal resources in one/several groups of reference signal resources are not transmitted, the first communication node may perform a zero-padding operation on positions where the reference signal resources are not transmitted in the zero-padding manner. The zero-padding operation in this embodiment is similar to the preceding zero-padding operation on the beam parameter information groups.

In an embodiment, the first communication node sends the beam parameter information groups, and the first communication node is configured with M CSI reports and configured to transmit M preferred pieces of beam parameter information. The first communication node selects one transmission resource from M transmission resources to transmit the preferred beam parameter information (for example, one second beam parameter information group is determined according to the K first beam parameter information groups, and Lc pieces of beam parameter information with the largest beam parameter information values are selected from the second beam parameter information group as the preferred beam parameter information). The remaining (M-1) transmission resources are not used for transmitting beam parameter information, for example, may be used for transmitting data or other signaling or signals.

In some examples, the at least one piece of beam parameter information (for example, the preferred beam parameter information) in the M beam parameter information groups is fed back. For example, the preferred beam parameter information is transmitted on an uplink transmission resource. In some examples, the preferred beam parameter information corresponding to the M beam parameter information groups is carried on at least one aperiodic PUSCH for transmission. In some examples, the preferred beam parameter information corresponding to the M beam parameter information groups is carried on at least one semi-persistent PUSCH for transmission. In some examples, the preferred beam parameter information corresponding to the M beam parameter information groups is carried on at least one periodic PUCCH for transmission. In some embodiments, CSI feedback refers to carrying CSI on an uplink transmission resource for transmission. In some embodiments, feeding back at least one piece of CSI through one CSI report refers to carrying the at least one piece of CSI on an uplink transmission resource indicated by the CSI report and transmitting the at least one piece of CSI to another communication node through the uplink transmission resource. The CSI includes beam parameter information.

In embodiments of the present application, the first beam parameter information group, the second beam parameter information group, and the third beam parameter information group are all beam parameter information groups, and "first", "second", and "third" here are used only to distinguish between different beam parameter information groups. The first beam parameter information group, the second beam parameter information group, and the third beam parameter information group do not constitute a sequence. In an example, the first beam parameter information group and the second beam parameter information group and/or the third beam parameter information group may include different numbers of elements. In an example, the first beam parameter information group and the second beam parameter information group and/or the third beam parameter information group may include different contents of elements, for example, each element included in the first beam parameter information group is first beam parameter information, each element included in the second beam parameter information group is second beam parameter information, and/or each element included in the third beam parameter information group is third beam parameter information. In an example, the first beam parameter information is L1-RSRP or an L1-SINR. The second beam parameter information and/or the third beam parameter information are L1-RSRP or L1-SINRs. In an example, the second beam parameter information and/or the third beam parameter information are beam indexes (such as CRIs or SSBRIs). In an example, the second beam parameter information and/or the third beam parameter information are CRIs and L1-RSRP. In an example, the second beam parameter information and/or the third beam parameter information are beam indexes (such as CRIs or SSBRIs) and L1-SINRs.

FIG. 3 is a flowchart of a beam parameter information receiving method according to an embodiment. As shown in FIG. 3, the method of this embodiment is applied to a second communication node. The method includes S210 and S220.

In S210, N sets of reference signal configuration information and K sets of reference signals are sent.

In an embodiment, a method for sending the K sets of reference signals may be sending the K sets of reference signals according to the N sets of reference signal configuration information.

The second communication node transmits the N sets of reference signal configuration information and the K sets of reference signals corresponding to K sets of reference signal configuration information. A first communication node receives the N sets of reference signal configuration information and receives the K sets of reference signals according to the N sets of reference signal configuration information, where K and N are each a positive integer and K is smaller than N.

That K and N are each a positive integer and K is smaller than N means that the second communication node transmits the K (smaller than N) sets of reference signals due to a conflict between reference signal resources configured by the second communication node or for other reasons, and the first communication node receives the K sets of reference signals. In practical application, in the case of no conflict between the configured reference signal resources and no other influencing factors, the second communication node may transmit N sets of reference signals, and the first communication node receives the N sets of reference signals, that is, K is equal to N. Of course, in some examples, the second communication node transmits the N sets of reference signals, and the first communication node can effectively receive only the K sets of reference signals due to a capability of the first communication node or poor signals.

In an embodiment, reference signal configuration information includes a resource type (resourceType), where the resource type defines a time domain transmission characteristic of a reference signal, and a time domain characteristic includes, but is not limited to, an aperiodic, periodic, or semi-persistent characteristic, which indicates that the transmitted reference signal is an aperiodically transmitted reference signal, a periodically transmitted reference signal, or a semi-persistently transmitted reference signal respectively, which is called an aperiodic reference signal, a periodic reference signal, or a semi-persistent reference signal respectively. The periodic reference signal or the semi-persistent reference signal is configured with a period and/or a slot offset via higher-layer signaling, where the period and the slot offset may be jointly encoded (for example, configured via higher-layer signaling periodicityAndOffset, where a user may know a transmission period and a transmission slot offset of the periodic or semi-persistent reference signal by acquiring the parameter). In an example, the second communication node configures the N sets of reference signal configuration information. The N sets of reference signal configuration information include K1 periodic reference signals, K2 aperiodic reference signals, and K3 semi-persistent reference signals. K1, K2, and K3 are each a non-negative integer, and K1 + K2 + K3 = N. In an example, the second communication node configures the N sets of reference signal configuration information. The N sets of reference signal configuration information include the same resource type, that is, two of K1, K2, and K3 have zero values, for example, all are periodic reference signals or aperiodic reference signals or semi-persistent reference signals. In an example, in the N sets of reference signal configuration information, the resource type of at least one reference signal is different from the resource type of another one reference signal, for example, at least two of K1, K2, and K3 have values greater than zero. In an example, the second communication node needs to configure and transmit N CSI-RSs, where N = 4, and each CSI-RS may be at least one of a periodic, semi-persistent, or aperiodic CSI-RS. For example, one configuration includes two sets of periodic reference signals, one set of aperiodic reference signals, and one set of semi-persistent reference signals; one configuration includes three sets of semi-persistent reference signals and one set of aperiodic reference signals; one configuration includes two sets of periodic reference signals and two sets of aperiodic reference signals; one configuration includes two sets of semi-persistent reference signals and two sets of periodic reference signals.

In an embodiment, one set of reference signals includes one of one reference signal resource, one group of reference signal resources, one reference signal resource set, or a reference signal resource corresponding to one reference signal resource configuration. For example, one set of reference signals includes one reference signal resource, for example, one CSI-RS resource, one SRS resource, or one SSB resource. In an embodiment, one set of reference signals includes one group of reference signal resources, for example, one group of CSI-RS resources, one group of SRS resources, or one group of SSB resources. In an embodiment, one set of reference signals includes one reference signal resource set, for example, one CSI-RS resource set, one SRS resource set, or one SSB resource set. In an embodiment, one set of reference signals includes the reference signal resource corresponding to one reference signal resource configuration, for example, a reference signal resource corresponding to one CSI-RS resource config/setting, a reference signal resource corresponding to one SRS resource config/setting, or a reference signal resource corresponding to one SSB resource config/setting. Here, one group of reference signals includes at least one reference signal resource, and multiple groups of reference signal resources may be included in the same reference signal resource set.

In S220, at least one piece of beam parameter information is received which is in M beam parameter information groups determined by the first communication node according to the K sets of reference signals, where K, M, and N are each a positive integer, and K is smaller than N.

In an embodiment, the second communication node does not expect to send smaller than N sets of reference signals. That is to say, if the second communication node configures the N sets of reference signal configuration information, the second communication node does not expect to transmit smaller than N sets of reference signals corresponding to the N sets of reference signal configuration information.

In an embodiment, the N sets of reference signal configuration information correspond to the N sets of reference signals, and the K sets of reference signals are part of the N sets of reference signals. In an embodiment, the beam parameter information groups may be determined in an AI beam prediction manner which may include, for example, spatial domain beam prediction and time domain beam prediction, or space-time beam prediction. In the spatial domain beam prediction, the N sets of reference signals corresponding to the N sets of reference signal configuration information belong to the same reference signal set or the same reference signal configuration.

In an embodiment, the first communication node determines the M beam parameter information groups according to the K sets of reference signals and at least one of the rules below.

Rule (1) The first communication node determines that the M beam parameter information groups are empty. That is, the first communication node does not perform beam prediction.

The second communication node transmits only the K sets of reference signals among the N sets of reference signals due to a resource conflict or for other reasons, where K is smaller than N. The first communication node receives the K sets of reference signals and finds that the K sets of reference signals are fewer than the expected N sets of reference signals and the M beam parameter information groups after a reference slot cannot be acquired through beam parameter information groups corresponding to the K sets of reference signals. Therefore, the first communication node does not perform the operation of acquiring the M beam parameter information groups through the beam parameter information groups corresponding to the K sets of reference signals. The first communication node does not feed back preferred beam parameter information after the reference slot, either.

Rule (2) The first communication node determines the M beam parameter information groups according to at least one set of reference signals among the K sets of reference signals.

The second communication node transmits only the K sets of reference signals among the N sets of reference signals due to the resource conflict or for other reasons, where K is smaller than N. The first communication node receives the K sets of reference signals and acquires the M beam parameter information groups according to the at least one set of reference signals among the K sets of reference signals.

In an example, the first communication node determines, according to a set of reference signals in the largest transmission slot among the K sets of reference signals, that is, a reference signal closest to the reference slot, a beam parameter information group corresponding to the reference signal in the largest transmission slot as the M beam parameter information groups. For example, Lc pieces of beam parameter information with the largest beam parameter information values in the beam parameter information group corresponding to the reference signal in the largest transmission slot are determined as the beam parameter information. Here, M = 1, and the M beam parameter information groups include only the Lc pieces of beam parameter information. Here, Lc is a positive integer. For example, Lc may have a value of 1.

Rule (3) The first communication node determines K first beam parameter information groups according to the K sets of reference signals and acquires the M beam parameter information groups (for example, second beam parameter information groups) according to the K first beam parameter information groups, where M is a positive integer.

The second communication node transmits only the K sets of reference signals among the N sets of reference signals due to the resource conflict or for other reasons, where K is smaller than N. The first communication node receives the K sets of reference signals and finds that the K sets of reference signals are fewer than the expected N sets of reference signals. The first communication node determines, according to a processing capability of the first communication node, whether the M beam parameter information groups can be acquired according to K beam parameter information groups. If yes, the K first beam parameter information groups are determined according to the K sets of reference signals, and the M beam parameter information groups are acquired according to the K first beam parameter information groups. Otherwise, the operation of acquiring the M beam parameter information groups through the beam parameter information groups corresponding to the K sets of reference signals is not performed, or the preferred beam parameter information corresponding to at least one beam parameter information group among the K beam parameter information groups is acquired in an agreed manner. In an example, the first communication node searches for an AI model locally, and the AI model can acquire the M beam parameter information groups according to the K first beam parameter information groups, for example, the K first beam parameter information groups are used as input, and the M beam parameter information groups are output.

Rule (4) The first communication node determines the K first beam parameter information groups according to the K sets of reference signals, processes the K first beam parameter information groups into N second beam parameter information groups, and acquires the M beam parameter information groups (for example, third beam parameter information groups) according to the N second beam parameter information groups, where M is a positive integer.

The second communication node transmits only the K sets of reference signals among the N sets of reference signals due to the resource conflict or for other reasons, where K is smaller than N. The first communication node receives the K sets of reference signals and finds that the K sets of reference signals are fewer than the expected N sets of reference signals. The first communication node determines, according to the processing capability of the first communication node, whether the M beam parameter information groups can be acquired according to the K beam parameter information groups. If yes, the first communication node determines the K first beam parameter information groups according to the K sets of reference signals, processes the K first beam parameter information groups into the N second beam parameter information groups, and acquires the M beam parameter information groups according to the N second beam parameter information groups. Otherwise, the operation of acquiring the M beam parameter information groups through the beam parameter information groups corresponding to the K sets of reference signals is not performed, or the preferred beam parameter information corresponding to at least one beam parameter information group among the K beam parameter information groups is acquired in the agreed manner.

In an example, the number of elements included in each of the K first beam parameter information groups is smaller than the number of elements included in each of the N second beam parameter information groups, and the number of elements included in each of the N second beam parameter information groups is smaller than or equal to the number of elements included in each of the M beam parameter information groups (for example, third beam parameter information groups).

In an example, the first communication node performs a zero-padding operation on the K first beam parameter information groups in a zero-padding manner to acquire the N second beam parameter information groups. For example, according to slots for transmitting reference signals corresponding to the K first beam parameter information groups, which beam parameter information groups are received among N beam parameter information groups is determined, and a beam parameter information group corresponding to a reference signal not received is padded with a zero matrix. The zero matrix is a vector of L₀×1 dimensions or a matrix of Lᵥ×Lₕ dimensions, where L₀, Lᵥ, and Lₕ are each a positive integer, Lᵥ × Lₕ = L₀, and L₀, Lᵥ, and Lₕ denote the number of elements in the beam parameter information group and the number of horizontal beams and the number of vertical beams corresponding to beam parameter information in the beam parameter information group, respectively.

Rule (5) When K is smaller than K0, the first communication node determines that the beam parameter information groups are empty or determines the M beam parameter information groups according to the at least one set of reference signals among the K sets of reference signals. When K is larger than K0, the first communication node determines the K first beam parameter information groups according to the K sets of reference signals, processes the K first beam parameter information groups into the N second beam parameter information groups, and acquires the M beam parameter information groups according to the N second beam parameter information groups, or the first communication node determines the K first beam parameter information groups according to the K sets of reference signals and determines the M beam parameter information groups according to the K first beam parameter information groups, where M and K0 are each a positive integer.

The second communication node transmits only the K sets of reference signals among the N sets of reference signals due to the resource conflict or for other reasons, where K is smaller than N. The first communication node receives the K sets of reference signals and finds that the K sets of reference signals are fewer than the expected N sets of reference signals. When K is larger than K0, the first communication node determines the K first beam parameter information groups according to the K sets of reference signals, processes the K first beam parameter information groups into the N second beam parameter information groups, and acquires the M beam parameter information groups according to the N second beam parameter information groups (for example, the operation is performed by an original AI model), or the first communication node determines the K first beam parameter information groups according to the K sets of reference signals and determines the M beam parameter information groups according to the K first beam parameter information groups (for example, a new AI model is searched for to perform the operation). When K is smaller than K0, the first communication node does not perform the operation of acquiring the M beam parameter information groups through the beam parameter information groups corresponding to the K sets of reference signals or determines the M beam parameter information groups according to the at least one set of reference signals among the K sets of reference signals.

K0 is a positive integer greater than 0 and is obtained according to a configuration of the second communication node or according to an agreement between the second communication node and the first communication node.

In some examples, the first communication node receives the first, second, ..., and (N-1)-th sets of reference signals among the N sets of reference signals, and the first communication node does not perform the operation of acquiring the M beam parameter information groups according to the K beam parameter information groups. In some examples, the first communication node receives at least the N-th set of reference signals among the N sets of reference signals, and the first communication node acquires preferred beam parameter information in a beam parameter information group corresponding to the N-th set of reference signals according to the N-th set of reference signals in the agreed manner. In some examples, the first communication node receives at least the N-th set of reference signals among the N sets of reference signals, and the first communication node determines the K first beam parameter information groups according to the K sets of reference signals, processes the K first beam parameter information groups into the N second beam parameter information groups, and acquires the M beam parameter information groups according to the N second beam parameter information groups.

In an embodiment, one set of reference signals includes one group of reference signal resources. If one or more reference signal resources in one/several groups of reference signal resources are not transmitted, the first communication node may perform a zero-padding operation on positions where the reference signal resources are not transmitted in the zero-padding manner. The zero-padding operation in this embodiment is similar to the preceding zero-padding operation on the beam parameter information groups.

In an embodiment, the first communication node sends the beam parameter information groups, and the first communication node is configured with M CSI reports and configured to transmit M preferred pieces of beam parameter information. The first communication node selects one transmission resource from M transmission resources to transmit the preferred beam parameter information (for example, one second beam parameter information group is determined according to the K first beam parameter information groups, and Lc pieces of beam parameter information with the largest beam parameter information values are selected from the second beam parameter information group as the preferred beam parameter information). The remaining (M-1) transmission resources are not used for transmitting beam parameter information, for example, may be used for transmitting data or other signaling or signals.

In some examples, the at least one piece of beam parameter information (for example, the preferred beam parameter information) in the M beam parameter information groups is fed back. For example, the preferred beam parameter information is transmitted on an uplink transmission resource. In some examples, the preferred beam parameter information corresponding to the M beam parameter information groups is carried on at least one aperiodic PUSCH for transmission. In some examples, the preferred beam parameter information corresponding to the M beam parameter information groups is carried on at least one semi-persistent PUSCH for transmission. In some examples, the preferred beam parameter information corresponding to the M beam parameter information groups is carried on at least one periodic PUCCH for transmission. In some embodiments, CSI feedback refers to carrying CSI on an uplink transmission resource for transmission. In some embodiments, feeding back at least one piece of CSI through one CSI report refers to carrying the at least one piece of CSI on an uplink transmission resource indicated by the CSI report and transmitting the at least one piece of CSI to another communication node through the uplink transmission resource. The CSI includes beam parameter information.

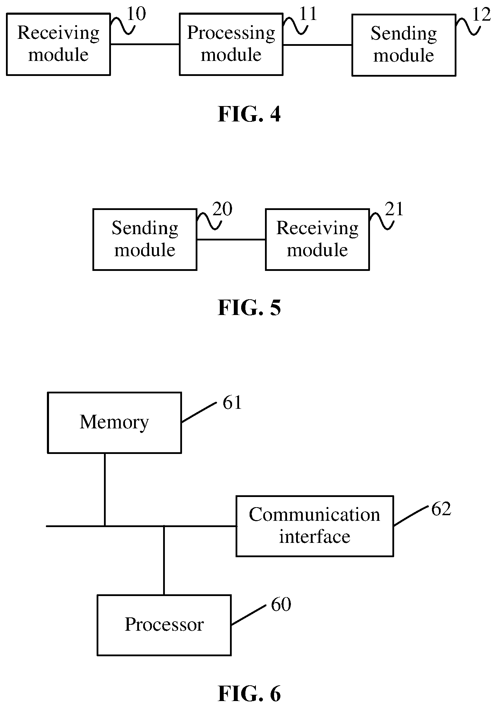

FIG. 4 is a structural diagram of a beam parameter information feedback apparatus according to an embodiment. The apparatus may be configured in a first communication node. As shown in FIG. 4, the apparatus includes a receiving module 10, a processing module 11, and a sending module 12.

The receiving module 10 is configured to receive N sets of reference signal configuration information and K sets of reference signals.

The processing module 11 is configured to determine M beam parameter information groups according to the K sets of reference signals.

The sending module 12 is configured to feed back at least one piece of beam parameter information in the M beam parameter information groups, where K, M, and N are each a positive integer, and K is smaller than N.

The beam parameter information feedback apparatus of this embodiment is configured to perform the beam parameter information feedback method of the embodiment shown in FIG. 2. The implementation principles and technical effects of the beam parameter information feedback apparatus of this embodiment are similar to those of the preceding embodiment.

In an embodiment, the receiving module 10 may include a first receiving submodule and a second receiving submodule, the first receiving submodule is configured to receive the N sets of reference signal configuration information, and the second receiving submodule is configured to receive the K sets of reference signals.

In an embodiment, one set of reference signals includes one of one reference signal resource, one group of reference signal resources, one reference signal resource set, or a reference signal resource corresponding to one reference signal resource configuration.

In an embodiment, the receiving module 10 is configured to receive the K sets of reference signals according to the N sets of reference signal configuration information.

In an embodiment, the N sets of reference signal configuration information correspond to N sets of reference signals, and the K sets of reference signals are part of the N sets of reference signals.

In an embodiment, the N sets of reference signals belong to the same reference signal set, or the N sets of reference signals belong to the same reference signal configuration.

In an embodiment, the first communication node does not expect to receive smaller than N sets of reference signals corresponding to the N sets of reference signal configuration information.

In an embodiment, the processing module 11 is configured to determine that the M beam parameter information groups are empty.

In an embodiment, the processing module 11 is configured to determine the M beam parameter information groups according to at least one set of reference signals among the K sets of reference signals.

In an embodiment, the processing module 11 is configured to determine, according to a set of reference signals in the largest transmission slot among the K sets of reference signals, a beam parameter information group corresponding to the reference signal in the largest transmission slot as the M beam parameter information groups.

In an embodiment, K is smaller than K0, and K0 is a positive integer.

In an embodiment, the processing module 11 is configured to determine K first beam parameter information groups according to the K sets of reference signals and determine the M beam parameter information groups according to the K first beam parameter information groups, where M is a positive integer.

In an embodiment, the processing module 11 is configured to determine the K first beam parameter information groups according to the K sets of reference signals, process the K first beam parameter information groups into N second beam parameter information groups, and determine the M beam parameter information groups according to the N second beam parameter information groups, where M is a positive integer.

In an example, the number of elements included in each of the K first beam parameter information groups is smaller than the number of elements included in each of the N second beam parameter information groups, and the number of elements included in each of the N second beam parameter information groups is smaller than or equal to the number of elements included in each of the M beam parameter information groups.

In an embodiment, the processing module 11 is configured to perform a zero-padding operation on the K first beam parameter information groups to acquire the N second beam parameter information groups.

In an embodiment, K is larger than K0, and K0 is a positive integer.

FIG. 5 is a structural diagram of a beam parameter information receiving apparatus according to an embodiment. The apparatus may be configured in a second communication node. As shown in FIG. 5, the apparatus includes a sending module 20 and a receiving module 21.

The sending module 20 is configured to send N sets of reference signal configuration information and K sets of reference signals.

The receiving module 21 is configured to receive at least one piece of beam parameter information in M beam parameter information groups determined by a first communication node according to the K sets of reference signals, where K, M, and N are each a positive integer, and K is smaller than N.

The beam parameter information receiving apparatus of this embodiment is configured to perform the beam parameter information receiving method of the embodiment shown in FIG. 3. The implementation principles and technical effects of the beam parameter information receiving apparatus of this embodiment are similar to those of the preceding embodiment.

In an embodiment, the sending module 20 may include a first sending submodule and a second sending submodule, the first sending submodule is configured to send the N sets of reference signal configuration information, and the second sending submodule is configured to send the K sets of reference signals.

In an embodiment, one set of reference signals includes one of one reference signal resource, one group of reference signal resources, one reference signal resource set, or a reference signal resource corresponding to one reference signal resource configuration.

In an embodiment, the sending module 20 is configured to send the K sets of reference signals according to the N sets of reference signal configuration information.

In an embodiment, the N sets of reference signal configuration information correspond to N sets of reference signals, and the K sets of reference signals are part of the N sets of reference signals.

In an embodiment, the N sets of reference signals belong to the same reference signal set, or the N sets of reference signals belong to the same reference signal configuration.

In an embodiment, the second communication node does not expect to send smaller than N sets of reference signals corresponding to the N sets of reference signal configuration information.

An embodiment of the present application provides a communication node. The communication node includes a processor configured to perform the method of any embodiment of the present application when executing a computer program. For example, the communication node may be a first communication node or a second communication node. The first communication node includes a processor configured to perform the beam parameter information feedback method of any embodiment of the present application when executing a computer program. The second communication node includes a processor configured to perform the beam parameter information receiving method of any embodiment of the present application when executing a computer program. For example, the first communication node may be a terminal device of any embodiment of the present application, and the second communication node may be an access network device of any embodiment of the present application, such as a base station.

For example, the following embodiments provide a structural diagram of a base station as the communication node and a structural diagram of a UE as the communication node.

FIG. 6 is a structural diagram of a base station according to an embodiment. As shown in FIG. 6, the base station includes a processor 60, a memory 61, and a communication interface 62. One or more processors 60 may be provided in the base station, and one processor 60 is shown as an example in FIG. 6. The processor 60, the memory 61, and the communication interface 62 in the base station may be connected via a bus or in other manners. In FIG. 6, the connection via a bus is shown as an example. The bus represents one or more of several types of bus structures, including a memory bus or a memory controller, a peripheral bus, an Accelerated Graphics Port (AGP), a processor, and a local bus using any bus structure among multiple bus structures.

As a computer-readable storage medium, the memory 61 may be configured to store software programs, computer-executable programs, and modules, such as program instructions/modules corresponding to the method in an embodiment of the present application. The processor 60 executes software programs, instructions, and modules stored in the memory 61 to perform at least one function application and data processing of the base station, that is, to perform the preceding method.

The memory 61 may include a program storage region and a data storage region, where the program storage region may store an operating system and an application program required by at least one function, and the data storage region may store data created depending on the use of a terminal. Additionally, the memory 61 may include a high-speed random-access memory and may also include a nonvolatile memory such as at least one disk memory, a flash memory, or another nonvolatile solid-state memory. In some examples, the memory 61 may include memories which are remotely disposed relative to the processor 60, and these remote memories may be connected to the base station via a network. Examples of the preceding network include, but are not limited to, the Internet, an intranet, a network, a mobile communication network, and a combination thereof.

The communication interface 62 may be configured to receive and send data.

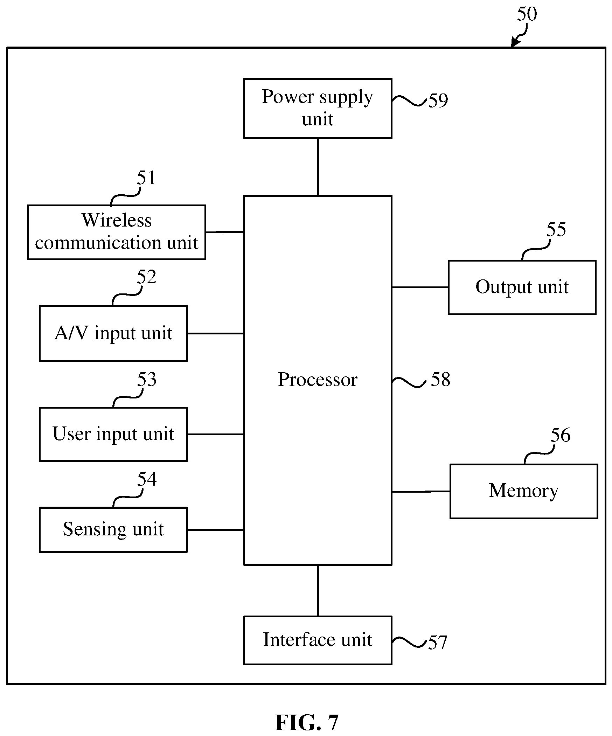

FIG. 7 is a structural diagram of a UE according to an embodiment. The UE may be implemented in multiple forms. The UE in the present application may include, but is not limited to, a mobile terminal device such as a mobile phone, a smart phone, a notebook computer, a digital broadcast receiver, a personal digital assistant (PDA), a portable device (PAD), a portable media player (PMP), a navigation apparatus, a vehicle-mounted terminal device, a vehicle-mounted display terminal, or a vehicle-mounted electronic rearview mirror or a fixed terminal device such as a digital television (TV) or a desktop computer.

As shown in FIG. 7, a UE 50 may include a wireless communication unit 51, an audio/video (A/V) input unit 52, a user input unit 53, a sensing unit 54, an output unit 55, a memory 56, an interface unit 57, a processor 58, and a power supply unit 59. FIG. 7 shows the UE including multiple components. However, it is to be understood that not all the shown components are required to be implemented. More or fewer components may be implemented instead.

In this embodiment, the wireless communication unit 51 allows radio communication between the UE 50 and a base station or a network. The A/V input unit 52 is configured to receive audio/video signals. The user input unit 53 may generate key input data according to commands input by a user to control various operations of the UE 50. The sensing unit 54 detects a current state of the UE 50, a position of the UE 50, touch input of the user into the UE 50, an orientation of the UE 50, acceleration or deceleration of the UE 50, a direction of acceleration or deceleration of the UE 50, and the like and generates commands or signals for controlling operations of the UE 50. The interface unit 57 serves as an interface through which at least one external apparatus can be connected to the UE 50. The output unit 55 is configured to provide output signals in visual, audio, and/or tactile manners. The memory 56 may store software programs and the like for processing and control operations performed by the processor 58 or may temporarily store data that has been output or is to be output. The memory 56 may include at least one type of storage medium. Moreover, the UE 50 may cooperate with a network storage apparatus that performs the storage function of the memory 56 through a network connection. The processor 58 is generally configured to control an overall operation of the UE 50. Under the control of the processor 58, the power supply unit 59 receives external power or internal power and provides appropriate power required for operating various elements and components.

The processor 58 executes programs stored in the memory 56 to perform at least one function application and data processing, for example, to perform the method of an embodiment of the present application.

An embodiment of the present application provides a computer-readable storage medium. The computer-readable storage medium stores a computer program which, when executed by a processor, causes the processor to perform the method of any embodiment of the present application.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. The computer-readable storage medium includes (a non-exhaustive list of) an electrical connection having one or more wires, a portable computer disk, a hard disk, a random-access memory (RAM), a read-only memory (ROM), an electrically erasable programmable read-only memory (EPROM), a flash memory, an optical fiber, a portable compact disk read-only memory (CD-ROM), an optical memory, a magnetic memory, or any appropriate combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any appropriate combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by using any appropriate medium including, but not limited to, a wireless medium, a wire, an optical cable, a radio frequency (RF), or any appropriate combination thereof.

Computer program codes for performing operations of the present disclosure may be written in one programming language or a combination of multiple programming languages. The programming languages include object-oriented programming languages (such as Java, Smalltalk, C++, Ruby, and Go) and conventional procedural programming languages (such as "C" and similar programming languages). The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer via any type of network (including a local area network (LAN) or a wide area network (WAN)) or may be connected to an external computer (for example, via the Internet provided by an Internet service provider).

It is to be understood by those skilled in the art that the term "user equipment" encompasses any appropriate type of wireless user device, such as a mobile phone, a portable data processing apparatus, a portable web browser, or an in-vehicle mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented by using any appropriate data storage technology, such as, but not limited to, a ROM, a RAM, an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A beam parameter information feedback method, the method being applied by a first communication node and comprising:
receiving N sets of reference signal configuration information and K sets of reference signals;
determining M beam parameter information groups according to the K sets of reference signals; and
feeding back at least one piece of beam parameter information in the M beam parameter information groups, wherein each of K, M, and N is a positive integer, and K is smaller than N.

2. The method according to claim 1, wherein one of the K sets of reference signals comprises one of: one reference signal resource, one group of reference signal resources, one reference signal resource set, or a reference signal resource corresponding to one reference signal resource configuration.

3. The method according to claim 1, wherein the receiving the K sets of reference signals comprises:
receiving the K sets of reference signals according to the N sets of reference signal configuration information.

4. The method according to claim 1, wherein the N sets of reference signal configuration information correspond to N sets of reference signals, and the K sets of reference signals are part of the N sets of reference signals.

5. The method according to claim 4, wherein the N sets of reference signals belong to a same reference signal set, or the N sets of reference signals belong to a same reference signal configuration.

6. The method according to claim 1, wherein the first communication node does not expect to receive smaller than N sets of reference signals corresponding to the N sets of reference signal configuration information.

7. The method according to claim 1, wherein the determining the M beam parameter information groups according to the K sets of reference signals comprises:
determining that the M beam parameter information groups are empty.

8. The method according to claim 1, wherein determining the M beam parameter information groups according to the K sets of reference signals comprises:
determining the M beam parameter information groups according to at least one set of reference signals among the K sets of reference signals.

9. The method according to claim 8, wherein determining the M beam parameter information groups according to the at least one set of reference signals among the K sets of reference signals comprises:
according to a set of reference signals in a largest transmission slot among the K sets of reference signals, determining a beam parameter information group corresponding to the reference signal in the largest transmission slot as the M beam parameter information groups.

10. The method according to claim 7 or 8, wherein K is smaller than K0, and K0 is a positive integer.

11. The method according to claim 1, wherein determining the M beam parameter information groups according to the K sets of reference signals comprises:
determining K first beam parameter information groups according to the K sets of reference signals; and
determining the M beam parameter information groups according to the K first beam parameter information groups, wherein M is a positive integer.

12. The method according to claim 1, wherein the determining the M beam parameter information groups according to the K sets of reference signals comprises:
determining K first beam parameter information groups according to the K sets of reference signals;
processing the K first beam parameter information groups into N second beam parameter information groups; and
determining the M beam parameter information groups according to the N second beam parameter information groups, wherein M is a positive integer.

13. The method according to claim 12, wherein a number of elements comprised in each of the K first beam parameter information groups is smaller than a number of elements comprised in each of the N second beam parameter information groups, and the number of elements comprised in each of the N second beam parameter information groups is smaller than or equal to a number of elements comprised in each of the M beam parameter information groups.

14. The method according to claim 12, wherein processing the K first beam parameter information groups into the N second beam parameter information groups comprises:
performing a zero-padding operation on the K first beam parameter information groups to acquire the N second beam parameter information groups.

15. The method according to claim 11 or 12, wherein K is larger than K0, and K0 is a positive integer.

16. A beam parameter information receiving method, the method being applied by a second communication node and comprising:
sending N sets of reference signal configuration information and K sets of reference signals; and
receiving at least one piece of beam parameter information in M beam parameter information groups determined by a first communication node according to the K sets of reference signals, wherein K, M, and N are each a positive integer, and K is smaller than N.

17. The method according to claim 16, wherein one of the K sets of reference signals comprises one of one reference signal resource, one group of reference signal resources, one reference signal resource set, or a reference signal resource corresponding to one reference signal resource configuration.

18. The method according to claim 16, wherein the sending the K sets of reference signals comprises:
sending the K sets of reference signals according to the N sets of reference signal configuration information.

19. The method according to claim 16, wherein the N sets of reference signal configuration information correspond to N sets of reference signals, and the K sets of reference signals are part of the N sets of reference signals.

20. The method according to claim 19, wherein the N sets of reference signals belong to a same reference signal set, or the N sets of reference signals belong to a same reference signal configuration.

21. The method according to claim 16, wherein the second communication node does not expect to send smaller than N sets of reference signals corresponding to the N sets of reference signal configuration information.

22. A first communication node, comprising a processor configured to perform the beam parameter information feedback method according to any one of claims 1 to 15 when executing a computer program.

23. A second communication node, comprising a processor configured to perform the beam parameter information receiving method according to any one of claims 16 to 21 when executing a computer program.

24. A computer-readable storage medium storing a computer program which, when executed by a processor, causes the processor to perform the beam parameter information feedback method according to any one of claims 1 to 15 or the beam parameter information receiving method according to any one of claims 16 to 21.
